# EUROPEAN PATENT SPECIFICATION

(11) **EP 1 564 441 B1**
(45) Date of publication and mention of the grant of the patent: **11.04.2018**
(21) Application number: 03730860.8
(22) Date of filing: 06.06.2003
(51) Int. Cl.: F16H 9/18

(54) **V-BELT TYPE VARIABLE SPEED DRIVE**
REGELBARER KEILRIEMENANTRIEB
ENTRAINEMENT A VITESSE VARIABLE A COURROIE TRAPEZOIDALE

(30) Priority: 11.11.2002 JP 2002327181
(43) Date of publication of application: 17.08.2005
(73) Proprietor: Yamaha Hatsudoki Kabushiki Kaisha, Iwata-shi, Shizuoka 438-8501 (JP)
(72) Inventor: ISHIDA, Yousuke, Iwata-shi, Shizuoka 438-8501 (JP)
(74) Representative: Grünecker Patent- und Rechtsanwälte PartG mbB
(86) International application number: PCT/JP2003/007238
(87) International publication number: WO 2004/044457

(56) References cited:
- EP-A2- 0 730 108
- JP-A- 2002 019 682
- JP-U- 62 041 956
- JP-U- 63 171 753
- US-A- 3 962 928
- US-A1- 2001 039 222
- US-B1- 6 270 436

## Description

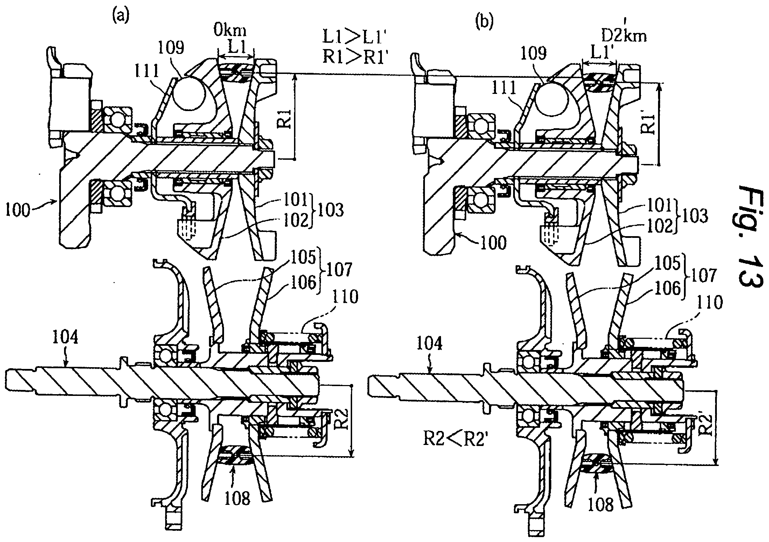

The present invention relates to a V-belt continuously variable transmission according to the preamble of independent claim 1. Further, the invention relates to a method for operating a V-belt continuously variable transmission according to the preamble of independent claim 7. US 3 962 928 A is considered as the closest prior art for claims 1 and 7. For example, in a scooter type motorcycle, a V belt type continuously variable transmission may be adopted as a power transmission mechanism for transmitting an engine power to a rear wheel. In this type of V belt type continuously variable transmission, as shown in Figs. 13(a) and 13(b), a structure is in general use in which a drive pulley 103, which is mounted on a crankshaft (input shaft) 100 and has a driving side fixed pulley half body 101 and a driving side movable pulley half body 102, and a driven pulley 107, which is mounted on an output shaft 104 and has a driven side fixed pulley half body 105 and a driven side movable pulley half body 106, are coupled by a V belt 108.

In the V belt type continuously variable transmission, a weight 109 moves the driving side movable pulley half body 102 to the side of the fixedpulleyhalf body 101 with a centrifugal force as an engine speed increases, and with this movement, the driven side movable pulley half body 106 of the driven pulley 107 moves in a direction apart from the fixed pulley half body 105 while compressing a spring 110. Consequently, a winding diameter of the drive pulley 103 increases and a winding diameter of the driven pulley 107 decreases, and a reduction gear ratio decreases to a reduction gear ratio at top time which is a minimum reduction gear ratio. In this case, it is a general practice to regulate a position in axial direction of the driving side movable pulley half body 102 to a top time position by regulating a position in radial direction of the weight 109 (e.g., see JP-A-8-178003, JP-A-8-178004).

However, in the case in which a structure for regulating a reduction gear ratio at top time on a drive pulley side as in the above-mentioned conventional transmission is adopted, a winding diameter of the drive pulley is reduced by an amount of abrasion of a V belt and, in accordance with this, a winding diameter on a driven pulley side increases. Therefore, there is a problem in that a reduction gear ratio deviates to the side of a reduction gear ratio at low time from the reduction gear ratio at top time, and a maximum speed decreases.

For example, as shown in Figs. 13(a) and 13(b), in the case in which an upper width dimension is reduced from L1 at the time when the V belt 108 is new to L1' due to abrasion of the V belt 108 when the motorcycle has traveled a certain distance D2 km, the winding diameter of the drive pulley 103 decreases from R1 in the top time position to R1' by an amount of this abrasion and the winding diameter of the driven pulley 107 increases from R2 to R2' , and the reduction gear ratio increases from R2/R1 to R2' /R1' . As a result, since a vehicle speed at top time with the same engine decreases, the V belt has to be replaced even if an abrasion loss is within a tolerance. Thus, improvement is required in realizing extension of a replacement period.

The present invention has been devised in view of the above-mentionedcircumstances, and it is an object of the present invention to provide a V belt type continuously variable transmission which can restrain deviation of a reduction gear ratio due to abrasion of a V belt to secure a vehicle speed at the same engine speed and can extend a replacement period of the V belt.

The inventive object is solved by the subject matter of independent claim 1.

Preferably, the V belt type continuously variable transmission is further characterized in that the driven side stopper is constituted by bringing a boss portion of the driven side movable pulley half body into abutment against a spring bearing member fixed to the output shaft.

Further, according to another beneficial embodiment, the V-belt continuously variable transmission is characterized in that the driving side stopper is constituted by bringing the weight into abutment against a stopper portion formed in an outer edge portion of the driving side movable pulley half body to regulate a position in radial direction of the weight. Moreover, in accordance with an advantageous embodiment, the V-belt continuously variable transmission is characterized in that the driving side stopper is constituted by bringing a boss portion of the driving side movable pulley half body into abutment against a boss portion of the driving side fixed pulley half body.

Still further, the V-belt continuously variable transmission is preferably characterized according to another in embodiment that the driven side movable pulley half body is adapted to be movable in the axial direction and rotate together with the output shaft by engaging a guide pin implanted in the output shaft with a slide groove of the driven side movable pulley half body, and the driven side stopper brings the end of the slide groove of the driven side movable pulley half body into abutment with the guide pin.

The inventive object is further solved by a method with the steps of independent claim 7.

In a further inventive embodiment, the reduction gear ratio changes to be smaller by an amount of abrasion of the V-belt.

### Brief Description of the Drawings

Fig. 1 is a left side view of a motor cycle mounted with a V belt type continuously variable transmission according to an embodiment of the present invention.
Fig. 2 is a sectional plan view of an engine unit provided with the V belt type continuously variable transmission.
Fig. 3 is a sectional plan view of the V belt type continuously variable transmission.
Fig. 4 is a sectional view showing a change in a winding diameter due to abrasion of a Vbelt of theVbelt type continuously variable transmission.
Fig. 5 is a sectional view showing a change in the winding diameter due to abrasion of the V belt.
Fig. 6 is a sectional view showing a change in the winding diameter due to abrasion of the V belt.
Fig. 7 is a characteristic chart showing a relation between a travel distance and an amount of abrasion of a V belt.
Fig. 8 is a characteristic chart showing a relation between a travel distance and a reduction gear ratio at top time.
Fig. 9 is a characteristic chart showing a relationbetween a travel distance and an engine speed at top time.
Fig. 10 is a sectional view for explaining a driving side stopper according to an embodiment of an invention of claim 5.
Fig. 11 is a sectional view showing a change in a winding diameter according to the driving side stopper.
Fig. 12 is a sectional view showing a change in the winding diameter according to the driving side stopper.
Fig. 13 is a view showing a conventional general V belt type continuously variable transmission.
Fig. 14 is a sectional view showing a modification of a stopper of a driven side pulley in the embodiment.

### Best Mode for Carrying Out the Invention

Embodiments of the present invention will be hereinafter described based upon the accompanying drawings.

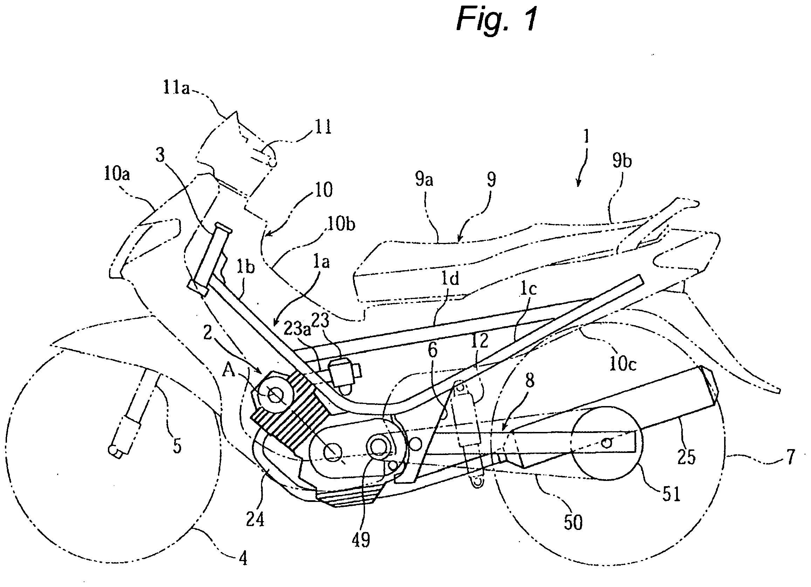

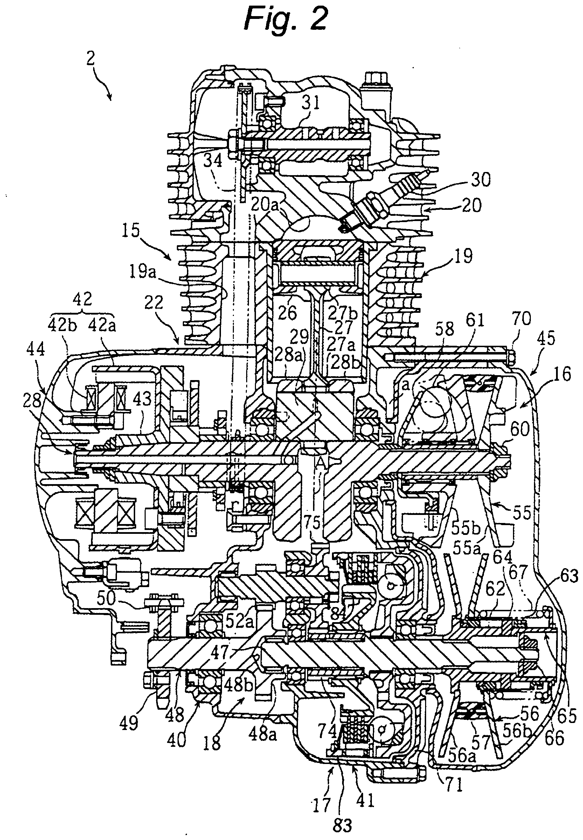

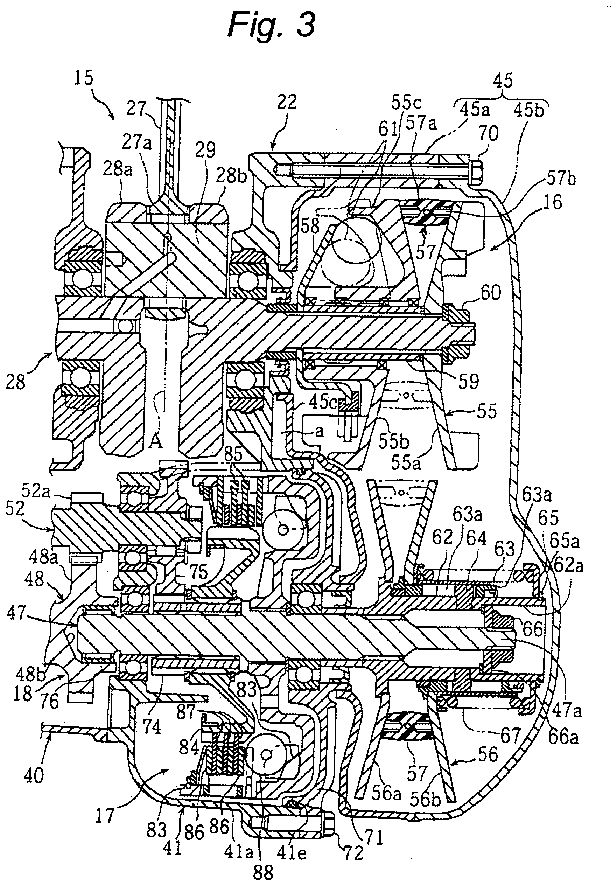

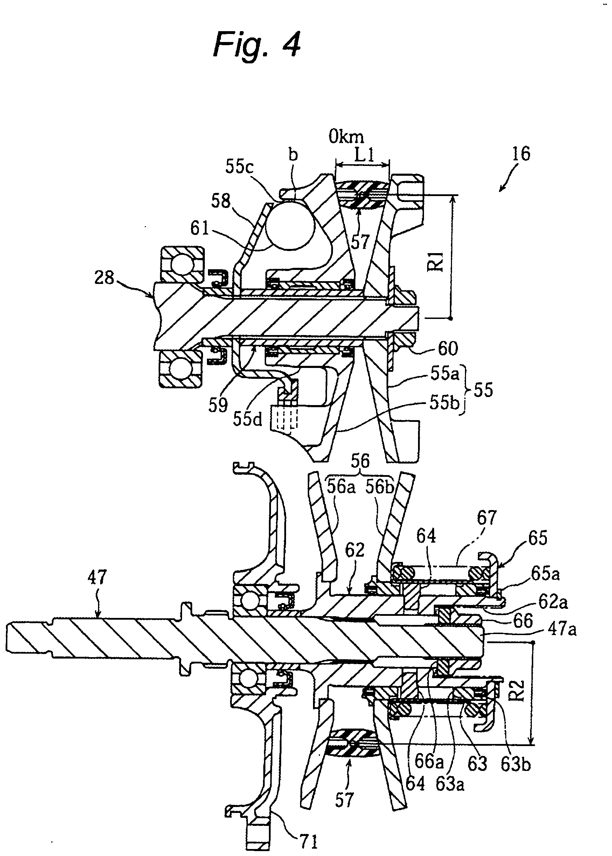

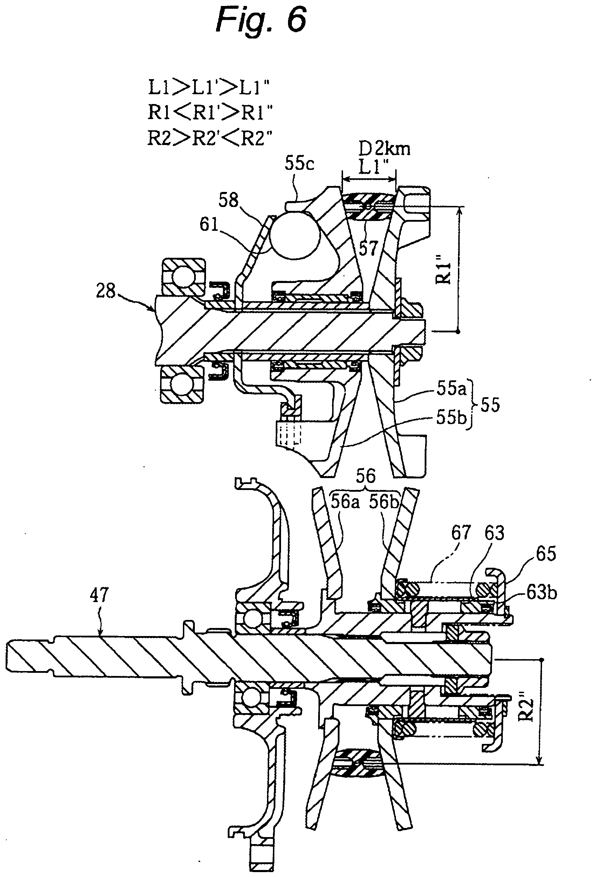

Figs. 1 to 6 are views for explaining a V belt type continuously variable transmission according to an embodiment of the present invention. Fig. 1 is a left side view of a motorcycle mounted with the V belt type continuously variable transmission of this embodiment, Fig. 2 is a sectional plan view of an engine unit provided with the V belt type continuously variable transmission, Fig. 3 is a sectional plan view of the V belt type continuously variable transmission, Figs. 4, 5, and 6 are sectional views showing a change in a winding diameter due to abrasion of a V belt, respectively. Note that the front and rear and the left and right in this embodiment means the front and rear and the left and right viewed from a person sitting on a sheet.

In Fig. 1, reference numeral 1 denotes a motorcycle, which has a schematic structure in which front forks 5 having a front wheel 4 axially supported thereon by head pipes 3, which is locked to a front end of a body frame 1a, are supported so as to be pivotable to the left and right, rear arms 8 having a rear wheel 7 axially supported thereon is supported from a rear armbracket 6, which is locked in a central part of themotorcycle, so as to be swingable vertically, and a sheet 9 including a driver sheet portion 9a and a rear passenger sheet portion 9b is arranged in an upper part of the body frame 1a.

The body frame 1a includes left and right down tubes 1b extending obliquely downward from the head pipes 3, left and right upper tubes 1c following rear ends of the respective down tubes 1b and extending obliquely upward, and left and right sheet rails 1d traversed in a longitudinal direction between the down tubes 1b and the upper tubes 1c and joined thereto. In addition, the body frame 1a is covered by a body cover 10 made of resin including a front cover 10a, a leg shield 10b, a side cover 10c, and the like.

A steering handlebar 11 is fixed to an upper end of the front fork 5 and is covered by a handle cover 11a. In addition, a rear cushion 12 is suspended between the rear arms 8 and the rear arm bracket 6.

An engine unit 2 is suspended and supported by the down tubes 1b of the body frame 1a. This engine unit 2 is provided with an air-cooling four-cycle single cylinder engine 15, which is mounted with a cylinder axial line A slanted approximately 45 degrees to the front, a V belt type continuously variable transmission 16, a multiple wet centrifugal clutch mechanism 17, and a reduction gear mechanism 18.

The engine 15 has a schematic structure in which a cylinder head 20 is connected to an upper interface of a cylinder block 19 and a crankcase 22 housing a crankshaft 28 is connected to a lower interface of the cylinder block 19.

A suction port (not shown) communicating with a combustion recessed portion 20a is opened on a rear surface of the cylinder head 20, and a carburetor 23 is connected to the suction port via a suction pipe 23a. In addition, an exhaust port (not shown) communicating with the combustion recessed portion 20a is opened on a front surface of the cylinder head 20, and an exhaust pipe 24 is connected to the exhaust port. This exhaust pipe 24 extends downward to the rear of the engine 15 and, then, extends obliquely backward through a right side thereof, and is connected to a muffler 25 disposed on a right side of the rear wheel 7. A spark plug 30 is inserted in the combustion recessed portion 20a.

A chain chamber 19a communicating with the inside of the crankcase 22 and the inside of the cylinder head 20 is formed in a left portion of the cylinder block 19, a timing chain 34, which drives to rotate a cam shaft 31 with the crankshaft 28, is disposed in the chain chamber 19a, and a not-shown suction valve and a not-shown exhaust valve is driven to open and close by this cam shaft 31.

A piston 26 is slidably inserted and arranged in a cylinder bore of the cylinder block 19. A small end 27b of a connection rod 27 is coupled to the piston 26, and a large end 27a of the connection rod 27 is coupled to a crankpin 29 which is fit between left and right crank arms 28a and 28b of the crankshaft 28.

A transmission shaft 47 is arranged behind the crankshaft 28 in parallel with the crankshaft 28, and a drive shaft 48 is arranged on the left in an axial direction of the transmission shaft 47 so as to be coaxial. A drive sprocket 49 is mounted at a left end of this drive shaft 48, and the drive sprocket 49 is coupled to a driven sprocket 51 of the rear wheel 7 via a chain 50.

A generator 42 is mounted at a left end of the crankshaft 28. This generator has a structure in which a rotor 42a is locked to a sleeve 43, which is fitted to the crankshaft 28 in a tapered manner, and a stator 42b opposed to the rotor 42a is fixed to a generator case 44.

The crankcase 22 is divided into a first case 40 on the left and a second case 41 on the right in a crankshaft direction. The generator case 44 housing the generator 42 is detachably mounted on the outer side in the crankshaft direction of this first case 40, and a transmission case 45 housing the V belt type continuously variable transmission 16 is mounted on the outer side in the crankshaft direction of the second case 41.

The centrifugal clutch mechanism 17 is multiple wet type and has a schematic structure in which a bowl-like outer clutch 83 is spline-fitted so as to rotate with the transmission shaft 47, an inner clutch 84 is arranged coaxially on the inner side in an axial direction of the outer clutch 83, and the inner clutch 84 is spline-fitted to a primary reduction small gear 74, which is rotatably mounted on the transmission shaft 47, so as to rotate with the same.

Plural outer clutch plates 85 are arranged in the outer clutch 83, two pressing plates 86, 86 are arranged so as to be located at both ends thereof, and both the clutch plates 85 and the pressing plates 86 are engaged in the outer clutch 83 so as to rotate with the outer clutch 83. In addition, inner clutch plates 87 are arranged between the outer clutch plates 85 and the pressing plates 86, and the respective inner clutch plates 87 are engaged with an external periphery of the inner clutch 84 so as to rotate with the inner clutch 84.

A cam surface 83a is formed on the inner side of the outer clutch 83, and a weight 88 is disposed between the cam surface 83a and the pressing plate 86 on the outer side. This weight 88 is moved in a clutch connection direction by the cam surface 83a as it moves to the outer side in a radial direction by a centrifugal force of the outer clutch 83, and presses to move the pressing plates 86 to bring the outer clutch plates 85 and the inner clutch plates 86 into a connected state with each other. Note that, in Figs. 2 and 3, a part above an axial line of the centrifugal clutch mechanism 17 shows an interrupted state and a part below the axial line shows a connected state.

The reduction gear mechanism 18 has a structure in which a reduction shaft 52 is disposed in parallel with the transmission shaft 47, the primary reduction small gear 74 is mounted on the transmission shaft 47 so as to be rotatable relatively, a primary reduction large gear 75, which engages with the primary reduction small gear 74, is coupled to the reduction shaft 52, a secondary reduction small gear 52a is integrally formed with the reduction gear 52, and a secondary reduction large gear 48a, which engages with the secondary reduction small gear 52a, is integrally formed with the drive shaft 48.

The drive shaft 48 is disposed on an identical axial line with the transmission shaft 47. A support hole 48b, in which a left end of the transmission shaft 47 is inserted, is recessed at a right end of this drive shaft 48, and the right end of the drive shaft 48 is axially supported by the transmission shaft 47 via a bearing 76 mounted in the support hole 48b.

The transmission case 45 is a case of a substantially closed structure, which is formed independently from the crankcase 22, and has an elliptical shape covering most parts of the upper side of the crankcase 22 viewed from a right side thereof. The transmission case 45 includes a case main body 45a of a bottomed box shape opening to the outer side in the crankshaft direction and a cover 45b closing the opening of the case main body 45a airtightly, and is tightened with and fixed to the second case 41 by a bolt 70. A gap "a" is provided between a bottom wall 45c of the case main body 45a and the second case 41, and heat from the engine 15 is restrained from transmitting to the transmission case 45 by this gap "a".

An opening 41e having a size allowing the centrifugal clutch mechanism 17 to be taken in and out is formed on the axial direction of the second case 41. This opening 41e is closed by a clutch cover 71 airtightly, and the clutch cover 71 is detachably tightened and fixed to an opening edge of the second case 41 by a bolt 72. Consequently, the centrifugal clutchmechanism 17 canbe removed together with the transmission shaft 47 by removing the transmission case 45 together with a driven pulley 56 of the V belt type continuously variable transmission 16 and removing the clutch cover 71.

The V belt type continuously variable transmission 16 has a structure in which a drive pulley 55 is mounted on a right outer end of the crank shaft (input shaft) 28, a driven pulley 56 is mounted on a right outer end of the transmission shaft (output shaft) 47, and a V belt 57 is wound around and coupled to both the pulleys 55, 56.

The V belt 57 is a belt made of resin having heat resistance and durability and is formed by arranging a large number of resin blocks 57a of a lateral H shape and coupling these resin blocks with a pair of annular coupling members 57b made of heat-resistant rubber. Note that it is also possible to adopt a belt made of rubber as the V belt.

The drive pulley 55 has a driving side fixed pulley half body 55a fixed to the right end of the crankshaft 28, and a driving side movable pulley half body 55b which is disposed so as to be slidable in an axial direction to the inner side in the crankshaft direction of the fixed pulley half body 55a and rotate together with the crankshaft 28 via a slide collar 59.

A cam plate 58 is disposed on the inner side in the crankshaft direction of the driving side movable pulley half body 55b. This cam plate 58 and the slide collar 59 are mounted on the right end of the crankshaft 28 by spline fitting, and the driving side fixed pulley half body 55a is mounted on the outer side in the axial direction thereof and fastened and fixed by a lock nut 60. A cylindrical boss portion 55d, which is integrally formed with an axial part of the driving side movable pulley half body 55b, is mounted on the slide collar 59 so as to be movable in the axial direction. A cylindrical weight 61 is disposed between the driving side movable pulley half body 55b and the cam plate 58.

The driven pulley 56 has a driven side fixed pulley half body 56a fixed to the right outer end of the transmission shaft 47 and a driven side movable pulley half body 56b which is disposed on the outer side in the crankshaft direction of the fixed pulley half body 56a so as to be slidable in the axial direction.

A cylindrical slide collar 62 is locked to an axial part of the driven side fixed pulley half body 56a, and the slide collar 62 is mounted on the transmission shaft 47 by spline fitting. A cylindrical boss portion 63 locked to an axial part of the driven side movable pulley half body 56b is mounted on this slide collar 62 so as to be movable in the axial direction.

Plural slide grooves 63a extending in the axial direction is formed in the boss portion 63, and a guide pin 64, which is implanted and fixed to the slide collar 62, is engaged with the slide grooves 63a, whereby the driven side movable pulley half body 56b rotates together with the fixed pulley half body 56a.

A spring bearing member 65 consisting of an annular plate is fixed to an outer end of the slide collar 62 by a circlip 65a, and a coil spring 67, which always biases the driven side movable pulley half body 56b to the side of the fixed pulley half body 56a, is provided between this spring bearing member 65 and the driven side movable pulley half body 56b.

As the rotation of the crankshaft 28 increases, the weight 61 is moved to the outer side in the radial direction by a centrifugal force to move the driving side movable pulley half body 55b to the outer side in the axial direction, whereby a winding diameter of the pulley increases. At the same time, the driven side movable pulley half body 56b compresses the coil spring 67 to move to the outer side in the axial direction, whereby the winding diameter of the pulley decreases and a reduction gear ratio decreases. In addition, when the rotation of the crankshaft 28 decreases, the weight 61 moves to the inner side in the radial direction to allow the movement of the driving side movable pulley half body 55b to the inner side in the axial direction, the driven side movable pulley half body 56b is biased by the coil spring 67 to move to the inner side in the axial direction, a winding diameter of the driven pulley 56 increases, whereby the winding diameter of the drive pulley 55 decreases and, as a result, a reduction gear ratio increases.

The driven pulley 56 is fastened and fixed to the transmission shaft 47 by a lock nut 66 screwed into a tip 47a of the transmission shaft 47. This lock nut 66 is inserted and arranged so as to sink into an outer end 62a of the slide collar 62.

Here, an inner diameter of the slide collar 62 is set to be larger stepwise than an outer diameter of the transmission shaft 47, and the tip 47a of the transmission shaft 47 is set to be smaller stepwise. Consequently, the lock nut 66 and a washer can be inserted and arranged in the outer ends 62a of the slide collar 62 without any trouble and, in this way, it becomes possible to locate the lock nut 66 on the inner side in the crankshaft direction than the spring bearing member 65 of the coil spring 67. Since the transmission is constituted as described above, protrusion to the outer side in the transmission shaft direction can be reduced with a simple structure while a necessary length of the coil spring 67 is secured.

Then, in the driven pulley 56, there is provided a driven side stopper which regulates a position in the axial direction of the driven side movable pulley half body 56b to a top time position when a space between the driven side movable pulley half body 56b and the driven side fixed pulley 56a is maximized. This driven side stopper is constituted so as to regulate the space of the driven pulley 56 to the space at top time by bringing an outer end surface 63b of the boss portion 63 of the driven side movable pulley half body 56b into abutment against the spring bearing member 65.

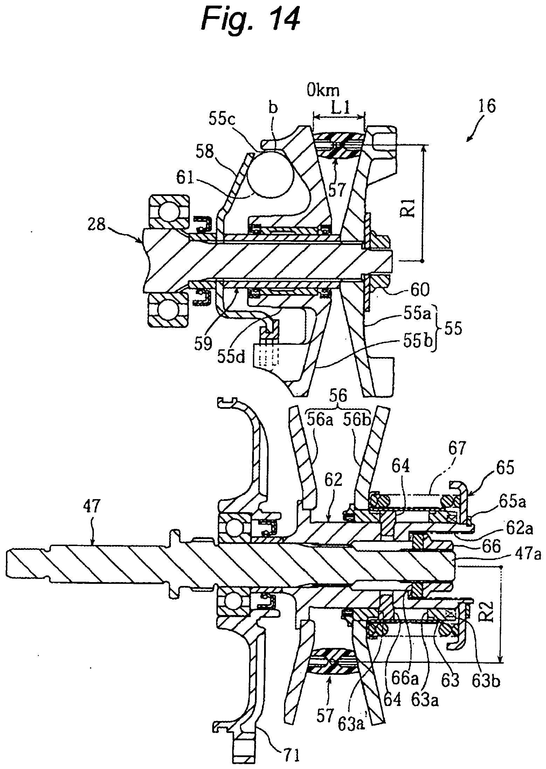

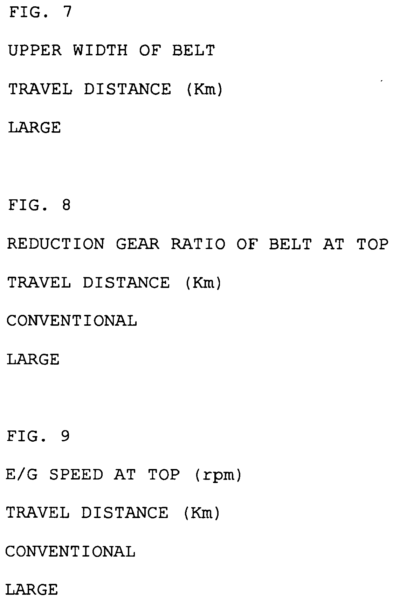

Note that, as shown in Fig. 14, the driven side stopper may be constituted so as to regulate the space of the driven side pulley 56 to the space at the top time by bringing an end in axial direction 63a' of a slide groove 63a, which is formed in the boss portion 63 of the driven side movable pulley half body 56b, into abutment against the guide pin 64.

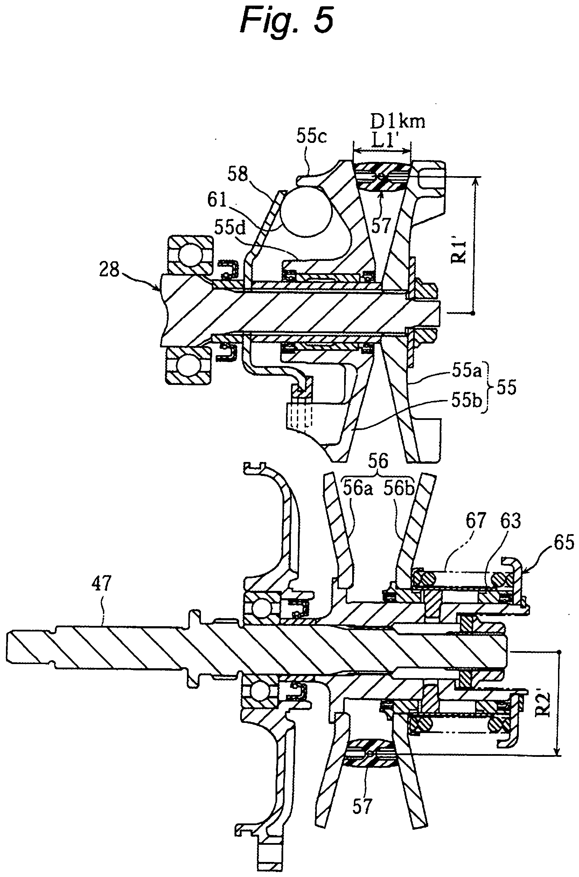

In addition, in the drive pulley 55, there is provided a driving side stopper which regulates a position in the axial direction of the driving side variable pulley half body 55b to a corrected top time position (position shown in Fig. 5) where a space between the driving side movable pulley half body 55b and the driving side fixed pulley half body 55a is smaller than the space in a top time position (position shown in Fig. 4) where the space is minimized. This driving side stopper is constituted by integrally forming a stopper portion 55c, against which the weight 61 abuts, at an external periphery of the driving side movable pulley half body 55b on the inner side of the crankshaft direction, and regulates a position in the radial direction of the weight 61 with the stopper portion 55c and the cam plate 58 to thereby regulate a space of the drive pulley 55 to a space at corrected top time. The stopper portion 55c is set such that a gap b is formed between the stopper portion 55c and the weight 61 in a state in which the V belt 57 is substantially new and the driven side movable pulley 56b is regulated to the top time position.

Next, actions and advantages of this embodiment will be described.

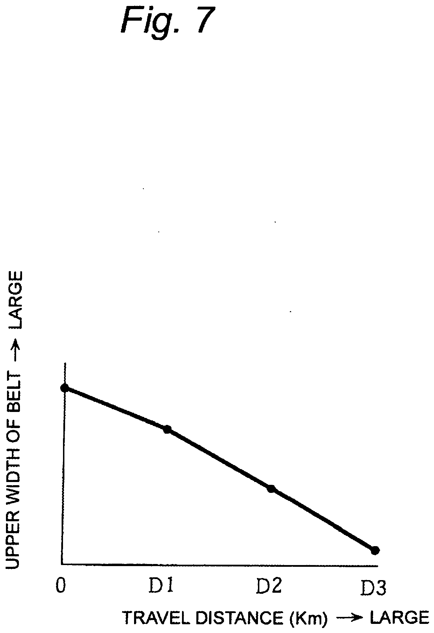

Figs. 7 to 9 are characteristic chart for explaining operations as well as actions and advantages of this embodiment, respectively.

Fig. 7 shows a relation between a travel distance and a change in an upper width dimension due to abrasion of a V belt. The upper width dimension of the V belt decreases as the travel distance increases. Note that an amount of abrasion of this V belt is substantially the same as that of the conventional one.

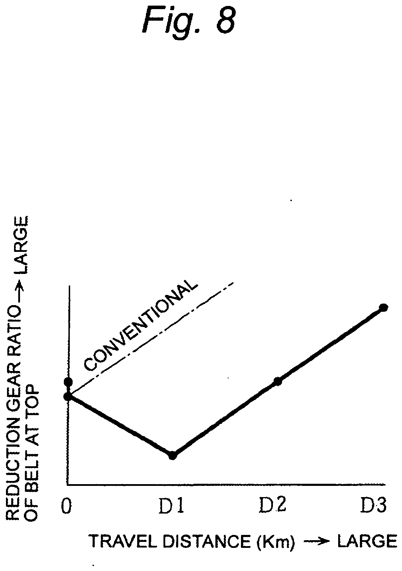

Fig. 8 shows a relation between a travel distance and a reduction gear ratio at top time. In this embodiment, as the travel distance increases, first, the reduction gear ratio changes to be smaller and, when the travel distance has generally reached a certain travel distance D1 km, the reduction gear ratio is reversed to change to be larger. Moreover, when the travel distance has reached a travel distance D2 km, the reduction gear ratio returns to the original reduction gear ratio and, then, the reduction gear ratio changes to be larger. On the other hand, in the conventional transmission for regulating a top time position on the drive pulley side, the reduction gear ratio changes to be larger as the travel distance increases from an initial stage.

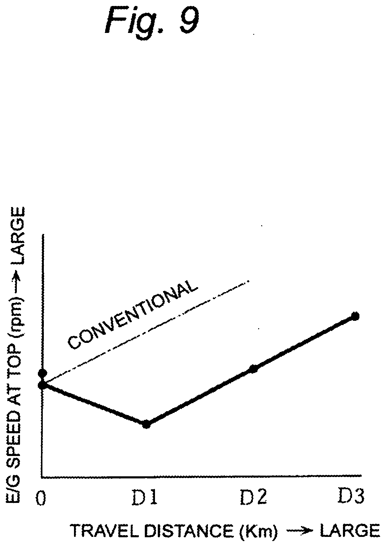

Fig. 9 shows a relation between a travel distance and an engine speed at top time. As described above, in the conventional transmission, since the reduction gear ratio deviates to be larger from an initial stage, it is necessary to increase the engine speed in order to obtain a predetermined vehicle speed. On the other hand, in this embodiment, since the reduction gear ratio changes to be smaller up to the vicinity of the certain travel distance D1 km, the predetermined vehicle speed is obtained even at a low engine speed. In addition, the predetermined vehicle speed is obtained without increasing the engine speed until the travel distance exceeds the travel distance D2 km.

At an idling time, the drive pulley 55 is in a position at low time where the space between the pulley half bodies is maximized and the winding diameter is minimized, and the driven pulley 55 is in a position at low time where the space between the pulley half bodies is minimized and the winding diameter is maximized by a biasing force of the coil spring 67, whereby the reduction gear ratio is maximized.

When the rotation of the crankshaft 28 increases, the weight 61 moves the driving side movable pulley half body 55b to the side of the fixed pulley half body 55a with a centrifugal force, whereby the winding diameter of the drive pulley 55 gradually increases and the driven side movable pulley half body 56b compresses the coil spring 67 to move to the side of the fixed pulley half body 56a, the winding diameter of the driven pulley 56 gradually decreases and the reduction gear ratio gradually decreases.

When the rotation of the crankshaft 28 further increases, the driving side movable pulley half body 55b is moved by the centrifugal force of the weight 61 and the winding diameter of the drive pulley 55 further increases and, in accordance with this, the driven side movable pulley half body 56b moves to the outer side in the axial direction, and the outer end surface 63b of the boss portion 63 of the driven side movable pulley half body 56b abuts against the spring bearing member 65. Consequently, the driven pulley 56 is regulated to the top time position where the winding diameter is minimized. In this case, as shown in Fig. 4, when the travel distance is zero or at the initial stage, the gap b exists between the weight 61 and the stopper portion 55c of the driving side movable pulley half body 55b.

As the travel distance increases, the V belt 57 is worn as shown in Fig. 7, and the upper width dimension of the belt decreases. For example, when the travel distance reaches D1 km, the upper width dimension of the V belt 57 decreases from L1 at the time when the V belt is new to L1'. Then, the driving side movable pulley half body 55b moves to the side of the fixed pulley half body 55a by an amount of abrasion and the winding diameter of the drive pulley 55 slightly increases from R1 at the initial stage to R1', the weight 61 abuts against the stopper portion 55c, and the winding diameter increases to the winding diameter at corrected top time larger than that at top time to be regulated to this winding diameter.

On the other hand, since the driven side movable pulley half body 56b of the driven pulley 56 is regulated to the top time position, the V belt 57 moves to the axis side and the winding diameter slightly decreases from R2 at the initial stage to R2'. In this way, as shown in Fig. 8, the reduction gear ratio changes to be smaller by an amount of abrasion of the V belt 57.

When the travel distance has reached D2 km and the upper width dimension of the V belt 57 further decreases from L1 at the time when the V belt is new to L1", since the driving side movable pulley half body 55b is regulated to the top time, the V belt 57 moves to the axis side and the winding diameter returns to R1" which is substantially equal to R1 at the initial stage. On the other hand, the driven side movable pulley half body 56b on the drive pulley 56 side moves to the side of the fixed pulley half body 56a by a biasing force of the coil spring 67 by an amount of abrasion of the V belt 57, whereby the winding diameter of the driven pulley 56 returns to R2" which is substantially equal to R2 at the initial stage.

That is, the reduction gear ratio changes to be smaller from the state in which the V belt 57 is new up to the vicinity of the travel distance D1 km and, when the travel distance has exceeded D1 km, the reduction gear ratio starts to change to be larger in the vicinity of D2 km. When the travel distance further increases from this state, the reduction gear ratio gradually changes to be larger.

In this way, in this embodiment, since the driven side movable pulley half body 56b of the driven pulley 56 is regulated to the top time position where the winding diameter is minimized, in the period until the travel distance reaches, for example, D1 km as described above, the winding diameter of the drive pulley 55 changes to be larger in accordance with the increase in the travel distance and the winding diameter of the driven pulley 56 changes to be smaller, whereby the reduction gear ratio changes to be smaller. In addition, since the driving side movable pulley half body 55b on the drive pulley 55 side is regulated to the corrected top time position, when the travel distance further increases exceeding D1 km, although the reduction gear ratio has been changing to be smaller to that point, the reduction gear ratio is reversed and changes to return to the original reduction gear ratio. As a result, the vehicle speed at top time does not decrease to the lower limit value even if the amount of abrasion of the V belt 57 increases considerably, the V belt 57 is not required to be changed at an amount of abrasion equivalent to that in the past, and the replacement period of the V belt can be extended. Incidentally, a standard for replacement of a V belt is set to a time when the travel distance has reached D2 km in the conventional transmission, whereas, in this embodiment, the replacement period is a time when the travel distance has reached D3 km.

In this embodiment, the top time position of the driven side movable pulley half body 56b is regulated by bringing the boss portion 63 of the driven side movable pulley half body 56b into abutment against the spring bearing member 65, and the top time position of the driving side movable pulley half body 55b is regulated by bringing the weight 61 into abutment against the stopper portion 55c of the driving side movable pulley half body 55b. Therefore, the driven side movable pulley half body 56b and the driving side movable pulley half body 55b can be regulated to the top time position and the corrected top time position with a simple structure without providing a separate component or a special stopper mechanism, and an increase in cost can be prevented.

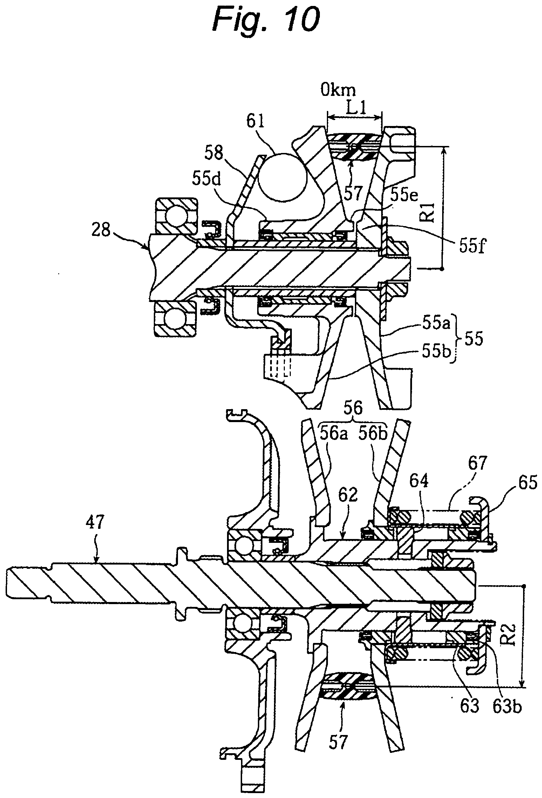

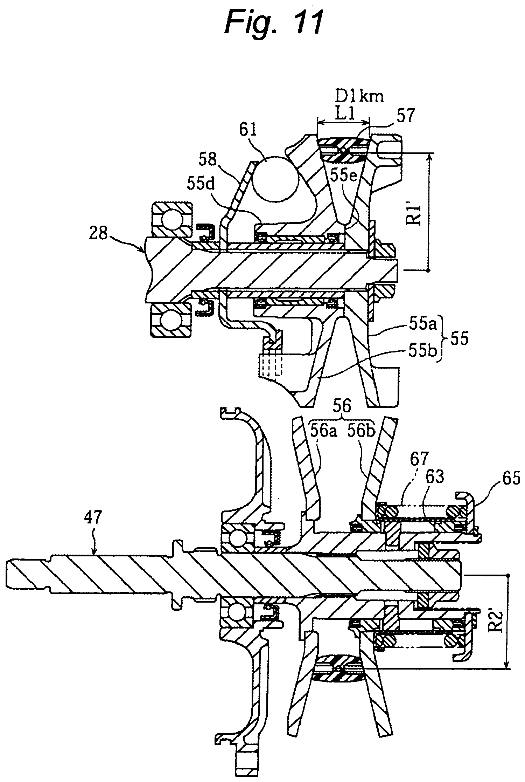

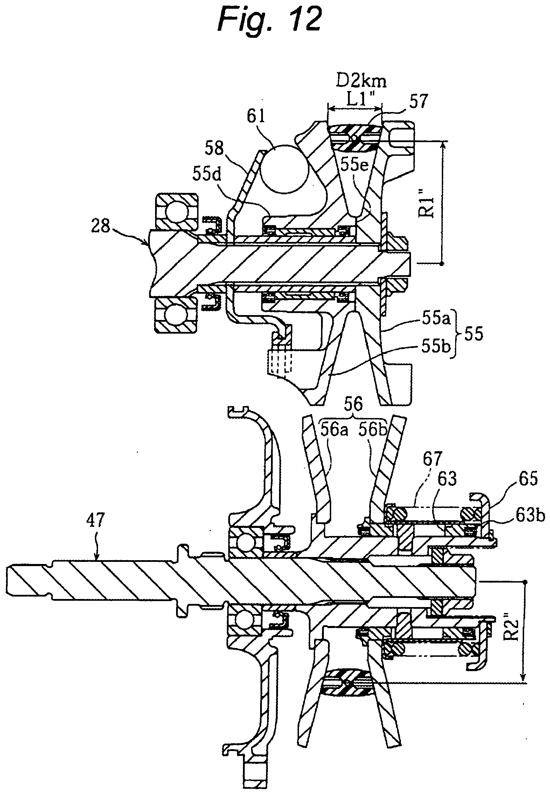

Figs. 10 to 12 are views for explaining the driving side stopper according to the present invention. In the figure, reference numerals and signs identical with those in Figs. 4 to 6 denote identical or equivalent components.

The driving side stopper of this embodiment is an example in which a projecting portion 55e is formed on an outer end surface of the boss portion 55d of the driving side movable pulley half body 55b, and the projecting portion 55e is brought into abutment against a boss portion 55f of the fixed pulley half body 55a, whereby the driving side movable pulley half body 55b is regulated to the corrected top time position.

In such a case, the driving side movable pulley half body 55b can also be regulated to the corrected top time position with a simple structure without providing a separate component or a special stopper mechanism, and the same advantages as the above-mentioned embodiment can be obtained. In addition, since a structure for bringing the driving side movable pulley half body 55b into abutment against the fixed pulley half body 55a to regulate it to the top time position is adopted, a pressing force can be prevented from acting on the Vbelt 57 by a centrifugal force of the weight 61, and abrasion of the V belt 57 can be restrained.

Note that, although the case inwhich the present invention is described with the case in which it is applied to a V belt type continuously variable transmission of a motorcycle as an example in the above-mentioned embodiment, a scope of application of the present invention is not limited to this, and the present invention can be applied to a V belt type continuously variable transmission for a vehicle such as a motor tricycle or a four wheel car.

In addition, although the present invention is described with a V belt of resin as an example in the above-mentioned embodiment, the present invention can be naturally applied to a V belt of rubber, and substantially the same advantages as the above-mentioned embodiment can be obtained in this case.

### Industrial Applicability

In the V belt type continuously variable transmission in accordance with the invention of claim 1 and in accordance with claim 2, since a reduction gear ratio at top time and the number of rotations of an input shaft necessary for obtaining the same number of rotations of an output shaft at top time decrease once and, then, increase in accordance with an increase in an operating time, respectively, an operating time until a rotating speed of the output shaft at top time decreases to a lower limit value becomes long compared with the conventional transmission and, therefore, a replacement period of a V belt can be extended.

In the invention of claims 3 and 4, the driven side movable pulley half body on the driven pulley side is regulated to the top time position where the winding diameter is minimized, and the driving side movable pulley half body on the drive pulley side is regulated to the corrected top time position where the winding diameter is maximized. Thus, when the V belt is worn in accordance with an increase in an operating time from start of operation, the space of the driven pulley does not change and the driving side movable pulley moves from the top time position to the corrected top time position to narrow the space of the drive pulley, and the winding diameter is increased. Therefore, the reduction gear ratio changes to be smaller. In addition, after the driving side movable pulley has reached the corrected top time position in accordance with an increase in an amount of abrasion of the V belt, the reduction gear ratio changes to increase in accordance with a further increase in the amount of abrasion. In this way, in accordance with an increase in the operating time, the reduction gear ratio changes to be smaller once and, then, changes to increase, whereby the number of rotations of the output shaft at top time does not decrease to a lower limit value until the amount of abrasion of the V belt becomes considerably large. As a result, a replacement period of the V belt can be extended.

In the invention of claim 5, the driven side stopper is constituted by bringing the boss portion of the driven side movable pulley half body against the spring bearing member. In the invention of claim 8, the driven side stopper is constituted by bringing the end in axial direction of the slide groove of the driven side movable pulley half body. Therefore, the driven side movable pulley half body can be regulated to the top time position with a simple structure without providing a separate component or a special stopper mechanism, and an increase in cost can be prevented.

In the invention of claim 6, the driving side stopper is constituted by bringing the weight into abutment against the stopper portion formed in the outer edge of the driving side movable pulley half body to regulate the position in radial direction of the weight. In the invention of claim 7, the driving side stopper is constituted by bringing the boss portion of the driving side movable pulley half body into abutment against the boss portion of the driving side fixed pulley half body. Therefore, as in claim 3, the driving side movable pulley half body can be regulated to the top time position with a simple structure without providing a separate component or a special stopper mechanism.

## Claims

1. A V-belt continuously variable transmission (16), in which a drive pulley (55) of a variable wound diameter type mounted on an input shaft (28) and a driven pulley (56) of a variable wound diameter type mounted on an output shaft (47) in parallel to the input shaft (28) are connected to each other by a V-belt (57), **characterized in that**
the transmission (16) is configured in such a way that a reduction ratio at a top time, when the drive pulley (55) has a maximum wound diameter and the driven pulley (56) has a minimum wound diameter, is first decreased and then increased in accordance with an increase in an operating time in a state of an operation with the use of the V-belt (57).

2. A V belt type continuously variable transmission according to claim 1, **characterized in that** the drive pulley (55) comprises a driving side fixed pulley half body (55a), which is fixed to the input shaft (28) so as not to be movable in an axial direction, and a driving side movable pulley half body (55b), which is mounted on the driving side fixed pulley half body (55a) so as to be movable in the axial direction and is movable to the side of the driving side fixed pulley half body (55a) with an centrifugal force of a weight (61) in accordance with the rotation of the input shaft (28), the driven pulley (56) comprises a driven side fixed pulley half body (56a), which is fixed to the output shaft (47) so as not to be movable in the axial direction, and a driven side movable pulley half body (56b), which is mounted on the driven side fixed pulley half body (56a) so as to be movable in the axial direction and is biased to the side of the driven side fixed pulley half body (56a) by a spring (67), wherein the transmission is provided with a driven side stopper, configured to regulate the driven side movable pulley half body (56b) in a top time position where a space between the driven side movable pulley half body (56b) and the driven side fixed pulley half body (56a) is maximized, and with a driving side stopper, configured to regulate the driving side movable pulley half body (55b) in a corrected top time position where a space between the driving side movable pulley half body (55b) and the driving side fixed pulley half body (55a) is smaller than the space in a top time position where the space is minimized.

3. A V belt type continuously variable transmission according to claim 2, **characterized in that** the driven side stopper is constituted by bringing a boss portion (63) of the driven side movable pulley half body (56b) into abutment against a spring bearing member (65) fixed to the output shaft (47).

4. A V belt type continuously variable transmission according to claim 2, **characterized in that** the driven side movable pulley half body (56b) is adapted to be movable in the axial direction and rotate together with the output shaft (47) by engaging a guide pin (64) implanted in the output shaft (47) with a slide groove (63a) of the driven side movable pulley half body (56b), and the driven side stopper brings the end of the slide groove (63a) of the driven side movable pulley half body (56b) into abutment with the guide pin (64).

5. A V belt type continuously variable transmission according to claim 2, **characterized in that** the driving side stopper is constituted by bringing the weight (61) into abutment against a stopper portion (55c) formed in an outer edge portion of the driving side movable pulley half body (55b) to regulate a position in radial direction of the weight (61).

6. A V belt type continuously variable transmission according to claim 2, **characterized in that** the driving side stopper is constituted by bringing a boss portion (55d) of the driving side movable pulley half body (55b) into abutment against a boss portion (55f) of the driving side fixed pulley half body (55a).

7. A method for operating a V-belt continuously variable transmission (16), in which a drive pulley (55) of a variable wound diameter type mounted on an input shaft (28) and a driven pulley (56) of a variable wound diameter type mounted on an output shaft (47) in parallel to the input shaft (28) are connected to each other by a V-belt (57), the method **characterized by** the steps of:
first decreasing a reduction ratio at a top time when the drive pulley (55) has a maximum wound diameter and the driven pulley (56) has a minimum wound diameter in accordance with in increase in an operating time in a state of an operation with the use of the V-belt (57); and then after a certain travel distance,
allowing said reduction ratio to increase.

## Patentansprüche

1. Ein V-Riemen-kontinuierlich-Variables-Getriebe (16), in dem eine Antriebs-Riemenscheibe (55) von einem Variabel-Umschlingungs-Durchmesser-Typ, die auf einer Eingangs-Welle (28) montiert ist, und eine Abtriebs-Riemenscheibe (56) von einem Variabel-Umschlingungs-Durchmesser-Typ, die auf einer Ausgangs-Welle (47) montiert ist, parallel zu der Eingangs-Welle (28), durch einen V-Riemen (57) miteinander verbunden sind, **dadurch gekennzeichnet, dass**
das Getriebe (16) konfiguriert ist, in so einer Weise, dass ein Reduktions-Verhältnis zu einer Top-Zeit, wenn die Antriebs-Riemenscheibe (55) einen maximalen Umschlingungs-Durchmesser hat und die Abtriebs-Riemenscheibe (56) einen minimalen Umschlingungs-Durchmesser hat, zunächst verringert, und dann erhöht ist, in Übereinstimmung mit einer Verringerung in einer Betriebs-Zeit, in einem Zustand eines Betriebs mit der Verwendung des V-Riemens (57).

2. Ein V-Riementyp-kontinuierlich-Variables-Getriebe gemäß Anspruch 1, **dadurch gekennzeichnet, dass** die Antriebs-Riemenscheibe (55) einen Antriebs-Seiten-fixierten-Riemenscheiben-Halbkörper (55a) umfasst, welche an der Eingangs-Welle (28) fixiert ist, sodass dieser in einer Axial-Richtung nicht bewegbar ist, und einen Antriebs-Seiten-bewegbaren-Riemenscheiben-Halbkörper (55b) umfasst, welcher an dem Antriebs-Seiten-fixierten-Riemenscheiben-Halbkörper (55a) montiert ist, sodass dieser in der Axial-Richtung bewegbar ist und zu der Seite des Antriebs-Seiten-fixierten-Riemenscheiben-Halbkörpers (55a) bewegbar ist, mit einer Zentrifugal-Kraft eines Gewichts (61), in Übereinstimmung mit der Rotation der Eingangs-Welle (28), die Abtriebs-Riemenscheibe (56) umfasst einen Abtriebs-Seiten-fixierten-Riemenscheiben-Halbkörper (56a), welcher an der Ausgangs-Welle (47) fixiert ist, sodass dieser in der Axial-Richtung nicht bewegbar ist, und einen Abtriebs-Seiten-bewegbaren-Riemenscheiben-Halbkörper (56b), welcher an dem Abtriebs-Seiten-fixierten-Riemenscheiben-Halbkörper (56a) montiert ist, sodass dieser in der Axial-Richtung bewegbar ist und gegen die Seite des Abtriebs-Seiten-fixierten-Riemenscheiben-Halbkörpers (56a) durch eine Feder (67) gedrückt ist, wobei das Getriebe mit einem Abtriebs-Seiten-Stopper vorgesehen ist, der konfiguriert ist, um den Abtriebs-Seiten-bewegbaren-Riemenscheiben-Halbkörper (56b) in einer Top-Zeit-Position zu regulieren, in der ein Raum zwischen dem Abtriebs-Seiten-bewegbaren-Riemenscheiben-Halbkörper (56b) und dem Abtriebs-Seiten-fixierten-Riemenscheiben-Halbkörper (56a) maximiert ist, und mit einem Antriebs-Seiten-Stopper, der konfiguriert ist, um den Antriebs-Seiten-bewegbaren-Riemenscheiben-Halbkörper (55b) in einer korrigierten Top-Zeit-Position zu regulieren, in der ein Raum zwischen dem Antriebs-Seiten-bewegbaren-Riemenscheiben-Halbkörper (55b) und dem Antriebs-Seiten-fixierten-Riemenscheiben-Halbkörper (55a) kleiner ist als der Raum in einer Top-Zeit-Position, in welcher der Raum minimiert ist.

3. Ein V-Riementyp-kontinuierlich-Variables-Getriebe gemäß Anspruch 2, **dadurch gekennzeichnet, dass** der Abtriebs-Seiten-Stopper gebildet ist, indem ein Nabenabschnitt (63) des Abtriebs-Seiten-bewegbaren-Riemenscheiben-Halbkörpers (56b) in Anlage gegen eine Feder-Lagerelement (65) gebracht ist, das an der Ausgangs-Welle (47) fixiert ist.

4. Ein V-Riementyp-kontinuierlich-Variables-Getriebe gemäß Anspruch 2, **dadurch gekennzeichnet, dass** der Abtriebs-Seiten-bewegbaren-Riemenscheiben-Halbkörper (56b) ausgebildet ist, um in der Axial-Richtung bewegbar zu sein und zusammen mit der Ausgangs-Welle (47) durch Eingreifen eines Führungs-Stifts (64), der in der Ausgangs-Welle (47) implantiert ist, in eine Gleit-Nut (63a) des Abtriebs-Seiten-bewegbaren-Riemenscheiben-Halbkörpers (56b), dreht, und der Abtriebs-Seiten-Stopper bringt das Ende der Gleit-Nut (63a) des Abtriebs-Seiten-bewegbaren-Riemenscheiben-Halbkörpers (56b) in Anlage mit dem Führungs-Stift (64).

5. Ein V-Riementyp-kontinuierlich-Variables-Getriebe gemäß Anspruch 2, **dadurch gekennzeichnet, dass** der Abtriebs-Seiten-Stopper gebildet ist, indem das Gewicht (61) in Anlage gegen einen Stopperabschnitt (55c) gebracht ist, der an einem äußeren Kantenabschnitt des Abtriebs-Seiten-bewegbaren-Riemenscheiben-Halbkörpers (55b) ausgebildet ist, um eine Position des Gewichts (61) in radialer Richtung zu regulieren.

6. Ein V-Riementyp-kontinuierlich-Variables-Getriebe gemäß Anspruch 2, **dadurch gekennzeichnet, dass** der Abtriebs-Seiten-Stopper gebildet ist, indem ein Nabenabschnitt (55d) des Abtriebs-Seiten-bewegbaren-Riemenscheiben-Halbkörpers (55b) in Anlage gegen einen Nabenabschnitt (55f) des Abtriebs-Seiten-fixierten-Riemenscheiben-Halbkörpers (55a) gebracht wird.

7. Ein Verfahren zum Betreiben eines V-Riementyp-kontinuierlich-Variablen-Getriebes (16), in dem eine Antriebs-Riemenscheibe (55) von einem Variabel-Umschlingungs-Durchmesser-Typ, die auf einer Eingangs-Welle (28) montiert ist, und eine Abtriebs-Riemenscheibe (56) von einem Variabel-Umschlingungs-Durchmesser-Typ, die auf einer Ausgangs-Welle (47) montiert ist, parallel zu der Eingangs-Welle (28), durch einen V-Riemen (57) miteinander verbunden sind, das Verfahren ist **gekennzeichnet durch** die Schritte:
zuerst Verringern eines Reduktions-Verhältnisses an einer Top-Zeit, wenn die Antriebs-Riemenscheibe (55) einen maximalen Umschlingungs-Durchmesser hat und die Abtriebs-Riemenscheibe (56) einen minimalen Umschlingungs-Durchmesser hat, in Übereinstimmung mit einer Erhöhung in einer Betriebs-Zeit in einem Zustand eines Betriebs mit der Verwendung des V-Riemens (57); und dann nach einer bestimmten Fahrdistanz,
Gestatten, dass dieses Reduktions-Verhältnis sich erhöht.

## Revendications

1. Transmission à variation continue (16) à courroie trapézoïdale, dans laquelle une poulie d'entraînement (55) de type à diamètre d'enroulement variable montée sur un arbre d'entrée (28) et une poulie entraînée (56) de type à diamètre d'enroulement variable montée sur un arbre de sortie (47) parallèle à l'arbre d'entrée (28) sont reliées l'une à l'autre par une courroie trapézoïdale (57), **caractérisée en ce que** la transmission (16) est configurée de manière à ce qu'un rapport de réduction à un temps maximum, lorsque la poulie d'entraînement (55) a un diamètre d'enroulement maximum et que la poulie entraînée (56) a un diamètre d'enroulement minimum, soit d'abord diminué, et augmenté ensuite au fur et à mesure de l'augmentation d'un temps de service dans un état de fonctionnement utilisant la courroie trapézoïdale (57).

2. Transmission à variation continue à courroie trapézoïdale selon la revendication 1, **caractérisée en ce que** la poulie d'entraînement (55) comprend un demi-corps de poulie fixe (55a) de côté d'entraînement, qui est fixé sur l'arbre d'entrée (28) de manière à ne pas être mobile dans une direction axiale, et un demi-corps de poulie mobile (55b) de côté d'entraînement, qui est monté sur le demi-corps de poulie fixe (55a) de côté d'entraînement de manière à être mobile dans la direction axiale et qui peut être déplacé vers le côté du demi-corps de poulie fixe (55a) de côté d'entraînement sous l'effet d'une force centrifuge d'un poids (61) en fonction de la rotation de l'arbre d'entrée (28), la poulie entraînée (56) comprend un demi-corps de poulie fixe (56a) de côté entraîné, qui est fixé sur l'arbre de sortie (47) de manière à ne pas être mobile dans la direction axiale, et un demi-corps de poulie mobile (56b) de côté entraîné, qui est monté sur le demi-corps de poulie fixe (56a) de côté entraîné de manière à être mobile dans la direction axiale et qui est contraint vers le côté du demi-corps de poulie fixe (56a) de côté entraîné par un ressort (67), dans laquelle la transmission est pourvue d'un arrêt de côté entraîné, conçu pour régler le demi-corps de poulie mobile (56b) de côté entraîné dans une position de temps maximum où un espace entre le demi-corps de poulie mobile (56b) de côté entraîné et le demi-corps de poulie fixe (56a) de côté entraîné est à son maximum, et d'un arrêt de côté d'entraînement conçu pour régler le demi-corps de poulie mobile (55b) de côté d'entraînement dans une position de temps maximum corrigée où un espace entre le demi-corps de poulie mobile (55b) de côté d'entraînement et le demi-corps de poulie fixe (55a) de côté d'entraînement est plus petit que l'espace dans une position de temps maximum, où l'espace est à son minimum.

3. Transmission à variation continue à courroie trapézoïdale selon la revendication 2, **caractérisée en ce que** l'arrêt de côté entraîné est formé en amenant une partie protubérante (63) du demi-corps de poulie mobile (56b) de côté entraîné en butée contre un élément formant palier de ressort (65) fixé sur l'arbre de sortie (47).

4. Transmission à variation continue à courroie trapézoïdale selon la revendication 2, **caractérisée en ce que** le demi-corps de poulie mobile (56b) de côté entraîné est conçu pour pouvoir être déplacé dans la direction axiale et tourner avec l'arbre de sortie (47) grâce à l'engagement d'une broche de guidage (64) enfoncée dans l'arbre de sortie (47) avec une rainure de coulissement (63a) du demi-corps de poulie mobile (56b) de côté entraîné, et l'arrêt de côté entraîné amène l'extrémité de la rainure de coulissement (63a) du demi-corps de poulie mobile (56b) de côté entraîné en butée avec la broche de guidage (64).

5. Transmission à variation continue à courroie trapézoïdale selon la revendication 2, **caractérisée en ce que** l'arrêt de côté d'entraînement est formé en amenant le poids (61) en butée contre une partie d'arrêt (55c) formée dans une partie de bord extérieur du demi-corps de poulie mobile (55b) de côté d'entraînement pour régler une position du poids (61) dans la direction radiale.

6. Transmission à variation continue à courroie trapézoïdale selon la revendication 2, **caractérisée en ce que** l'arrêt de côté d'entraînement est formé en amenant une partie protubérante (55d) du demi-corps de poulie mobile (55b) de côté d'entraînement en butée contre une partie protubérante (55f) du demi-corps de poulie fixe (55a) de côté d'entraînement.

7. Procédé de fonctionnement d'une transmission à variation continue (16) à courroie trapézoïdale dans laquelle une poulie d'entraînement (55) de type à diamètre d'enroulement variable montée sur un arbre d'entrée (28) et une poulie entraînée (56) de type à diamètre d'enroulement variable montée sur un arbre de sortie (47) parallèle à l'arbre d'entrée (28) sont reliées l'une à l'autre par une courroie trapézoïdale (57), le procédé étant **caractérisé par** les étapes consistant à :
réduire d'abord un rapport de réduction à un temps maximum où la poulie d'entraînement (55) a un diamètre d'enroulement maximum et où la poulie entraînée (56) a un diamètre d'enroulement minimum au fur et à mesure de l'augmentation d'un temps de service dans un état de fonctionnement utilisant la courroie trapézoïdale (57) ; puis, après une certaine distance de trajet, faire augmenter ledit rapport de réduction.
